# EUROPEAN PATENT SPECIFICATION

(11) **EP 3 057 169 B1**
(45) Date of publication and mention of the grant of the patent: **27.09.2017**
(21) Application number: 16155981.0
(22) Date of filing: 16.02.2016
(51) Int. Cl.: H01M 10/04, H01M 10/0583, H01M 2/06

(54) **SECONDARY BATTERY**
SEKUNDÄRBATTERIE
BATTERIE SECONDAIRE

(30) Priority: 16.02.2015 KR 20150023319
(43) Date of publication of application: 17.08.2016
(73) Proprietor: Samsung SDI Co., Ltd., Gyeonggi-do 17084 (KR)
(72) Inventor: KIM, Hyunjun, 17084 Gyeonggi-do (KR); KIM, Kyongjin, 17084 Gyeonggi-do (KR)
(74) Representative: Taor, Simon Edward William

(56) References cited:
- US-A- 6 037 077
- US-A1- 2005 153 197
- US-A1- 2005 191 545
- US-A1- 2012 113 566
- US-A1- 2014 234 682

## Description

The present invention relates to a secondary battery.

A secondary battery is rechargeable to be reused and is generally used as a power supply for a mobile device, a hybrid vehicle or an electric vehicle. A secondary battery typically includes an electrode assembly and an outer case accommodating the electrode assembly. Secondary batteries may be classified into a pouch type secondary battery, a prismatic secondary battery, and a cylindrical secondary battery depending on the kind of outer case used. In addition, the electrode assembly accommodated in the outer case may be classified into a wound electrode assembly and a stacked electrode assembly depending on the configuration of the electrode assembly. The wound electrode assembly is configured such that a separator is located between a positive electrode plate and a negative electrode plate, which may be elongated sheets and the resultant product is wound. The stacked electrode assembly is configured such that a positive electrode plate and a negative electrode plate are sequentially stacked with a separator therebetween.

US 2012/0113566 relates to an electrochemical device.

US 6037077 relates to an electrode assembly.

US 2005/191545 relates to an electrode assembly.

US 2014/234682 relates to an electrode assembly.

Embodiments of the present invention may provide a secondary battery which can provide a two-fold increase in the capacity while reducing the number of electrode plates stacked by about half.

In embodiments, the secondary battery can be provided in various forms depending on the types of electrode plates folded. Further, embodiments also provide a secondary battery which can allow a process of folding an electrode plate and a process subsequent to the folding process by forming a coupling part on a folding part of the electrode plate to be simplified. These and other aspects of the present invention will be described in or be apparent from the following description of the embodiments.

According to an aspect of the present invention, there is provided a secondary battery including an electrode assembly having a first electrode plate, a separator and a second electrode plate stacked and folded about a folding part, an outer case surrounding the electrode assembly, and an electrode lead electrically connected to the electrode assembly and extending to the outside of the outer case.

The electrode assembly may be is defined by first and second regions about the folding part and the first and second regions may be symmetrically formed.

The electrode assembly may be defined by first and second regions about the folding part and the first and second regions may be asymmetrically formed.

The electrode assembly may be defined by first and second regions about the folding part and the first region or the second region may have an inclined surface formed at its end.

In addition, the electrode assembly may be defined by first and second regions about the folding part and areas of the first and second regions may be equal to each other. Further, the electrode assembly may be defined by first and second regions about the folding part and areas of the first and second regions may be different from to each other.

The electrode assembly may further include a coupling part formed along the folding part.

The coupling part may be formed on an inner surface of the electrode assembly.

The coupling part may be formed between each of the first electrode plate, the separator and the second electrode plate.

The coupling part may be formed on an outer surface of the electrode assembly.

The coupling part may be made of polypropylene (PP), polyethylene (PE) or ethylene propylene diene M-class (EPDM) rubber.

The electrode assembly may further include an additional coupling part formed at a position spaced apart from the folding part to surround the electrode assembly.

As described above, the secondary battery according to embodiments of the present invention can provide a two-fold increase in the capacity while reducing the number of electrode plates stacked to half. In an exemplary embodiment, the present invention provides a secondary battery, which can provide a two-fold increase in the capacity while reducing the number of electrode plates stacked to half by stacking a predetermined number of electrode plates and then folding to provide an electrode assembly.

In addition, the secondary battery according to embodiments of the present invention can be provided in various forms according to types of electrode plates folded. In an exemplary embodiment, an electrode assembly folded in various forms can be attained by differently designing a lower electrode plate and an upper electrode plate folded with respect to each other. Accordingly, embodiments of the present invention provide a secondary battery formed in various forms so as to comply with requirements of external sets.

Further, the secondary battery according to embodiments of the present invention can facilitate a process of folding an electrode plate and a process subsequent to the folding process by forming a coupling part on a folding part of the electrode plate. In an exemplary embodiment, the present invention provides a secondary battery, which can facilitate folding of an electrode assembly by forming beforehand a coupling part on a folding part of an electrode plate, like a rubber band that does not react with an electrode plate, and which can easily perform storage and transportation of the electrode assembly and encasing of the electrode assembly.

According to an aspect of the invention, there is provided a secondary battery comprising: an electrode assembly comprising a first electrode plate, a separator, and a second electrode plate stacked together and folded about a folding part; an outer case surrounding the electrode assembly; and an electrode lead electrically connected to the electrode assembly and extending to the outside of the outer case, wherein the electrode assembly comprises first and second regions that extent from the folding part. In some embodiments, the first and second regions may be symmetrically formed and the ends of the first and second regions may be adjacent to each other. In other embodiments, the first and second regions may have different shapes. The first and second regions may be differently shaped so as to fit into a receiving space in an electronic device. The outer case may be shaped to fit the shape of the electrode assembly.

According to an aspect of the invention, there is provided a secondary battery as set out in claim 1. Preferred features of this aspect are set out in claims 2 to 12.

According to an aspect of the invention, there is provided an electrical device as set out in claim 13. Preferred features of this aspect are set out in claim 14.

The above and other features and advantages of the present invention will become more apparent by describing in detail embodiments thereof with reference to the attached drawings in which:
FIGS. 1A and 1B are perspective views of a secondary battery and an electrode assembly, respectively, according to an embodiment of the present invention, and FIG. 1C is a perspective view of an unfolded electrode assembly;
FIG. 2 is a cross-sectional view of the secondary battery illustrated in FIG. 1A;
FIGS. 3A and 3B are perspective views of a secondary battery and an electrode assembly, respectively, according to another embodiment of the present invention;
FIG. 4 is a perspective view of a secondary battery according to still another embodiment of the present invention;
FIG. 5A is a perspective view of a secondary battery according to yet another embodiment of the present invention and FIG. 5B is a perspective view depicting a state in which an electrode assembly is yet to be folded;
FIG. 6 is a perspective view of a secondary battery according to still another embodiment of the present invention;
FIG. 7 is a perspective view of a secondary battery according to yet another embodiment of the present invention;
FIGS. 8A and 8B are a perspective view and a partly enlarged perspective view of an electrode assembly, respectively, according to still another embodiment of the present invention;
FIGS. 9A, 9B and 9C are a perspective view and two cross-sectional views, respectively, of an unfolded electrode assembly; and
FIG. 10 is a perspective view of an electrode assembly of a secondary battery according to still another embodiment of the present invention.

Example embodiments of the present invention will now be described in more detail with reference to accompanying drawings, such that those skilled in the art can easily practice the present invention.

The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims.

In the following drawings, the thickness of layers and regions are exaggerated for clarity. Like numbers refer to like elements throughout. As used herein, the term "and/or" includes any and all combinations of one or more of the associated listed items.

In addition, it will be understood that when an element A is referred to as being "connected to" an element B, it can be directly connected to the element B or an intervening element C may be present between the element A and the element B, so that the element A and the element B can be indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer and/or section from another element, component, region, layer and/or section. Thus, for example, a first element, a first component, a first region, a first layer and/or a first section discussed below could be termed a second element, a second component, a second region, a second layer and/or a second section without departing from the teachings of the present invention.

In addition, it will be understood that the term "secondary battery" used herein is intended to encompass a rechargeable secondary battery, such as a lithium ion battery, a lithium polymer battery, or a lithium ion polymer battery, and to mean a low-capacity battery employed to a smart phone, a cellular phone, a tablet, a notebook computer, or a digital camera, and/or a high-capacity battery employed to an electric vehicle, a hybrid electric vehicle, an electric bicycle, or an electric motorcycle, but aspects of the present invention are not limited thereto.

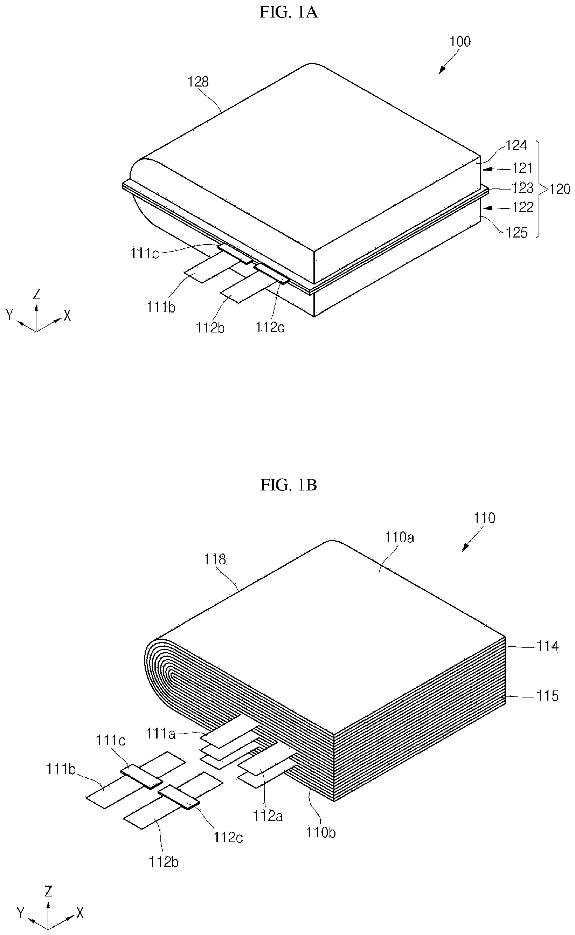

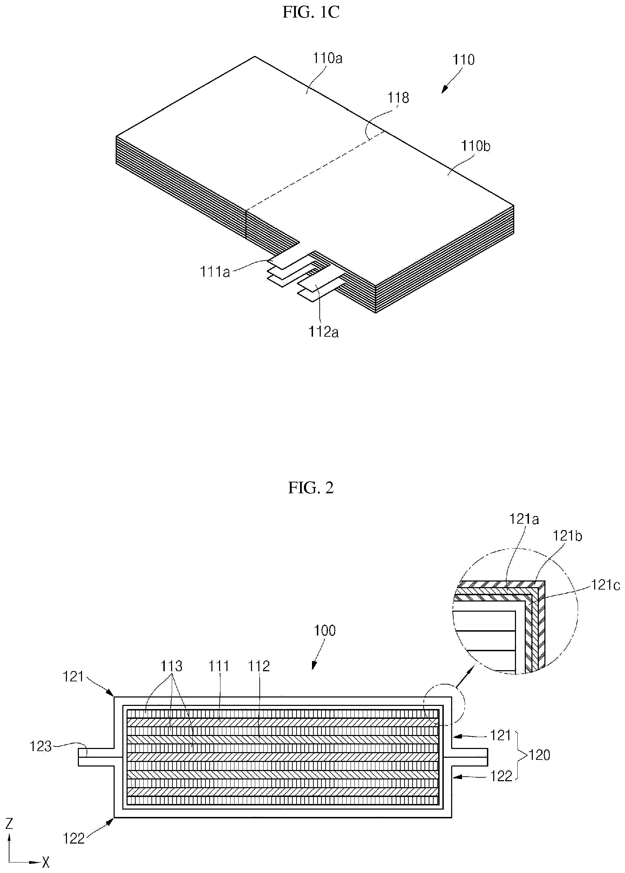

Referring to FIGS. 1A and 1B, perspective views of a secondary battery (100) and an electrode assembly (110), respectively, according to an embodiment of the present invention are illustrated and referring to FIG. 1C, a perspective view illustrating a state an unfolded electrode assembly 110 is illustrated. Referring to FIG. 2, a cross-sectional view of the secondary battery 100 illustrated in FIG. 1A is illustrated.

As illustrated in FIGS. 1A to 1C and FIG. 2, the secondary battery 100 according to the embodiment of the present invention includes a stacked and folded electrode assembly 110, an outer case 120 surrounding the electrode assembly 110, and electrode leads 111b and 112b extending from the electrode assembly 110 to the outside of the outer case 120.

The electrode assembly 110 may include a first electrode plate 111, a second electrode plate 112, and a separator 113 located therebetween, which are stacked and then wound approximately one time using a roughly central portion as a winding shaft. Hence, in this embodiment, the electrode assembly 110 is folded about a central portion. In the following description, the central portion may also be referred to as a folding part 118.

In more detail, the electrode assembly 110 is stacked in a first direction (Z-axis) and is folded approximately one time in a second direction (Y- or X-axis) in view of a centrally positioned folding part 118. In such a manner, the electrode assembly 110 is configured such that a region surrounding the folding part 118 defines a substantially semicircular section and regions 114 and 115 opposite to the folding part 118 define substantially rectangular sections. Accordingly, a first side 128 of the outer case 120 surrounding the electrode assembly 110 is defines a substantially semicircular section and second sides 124 and 125 of the outer case 120 also define substantially rectangular sections.

In addition, the electrode assembly 110 may be defined as a first region 110a and a second region 110b in view of the folding part 118. In one embodiment, the first region 110a and the second region 110b may be symmetrical with each other. In other words, areas or volumes of the first and second regions 110a and 110b of the electrode assembly 110 may be substantially equal to each other in view of the folding part 118. In addition, surfaces of the first and second regions 110a and 110b and opposing ends 114 and 115 thereof may be substantially perpendicular to each other. Further, electrode tabs to be described later may outwardly extend from the first region 110a and/or the second region 110b.

The first electrode plate 111 may be a positive electrode plate, and the second electrode plate 112 may be a negative electrode plate, or vice versa. The first electrode plate 111 may include a first current collector and a first active material, and the second electrode plate 112 may include a second current collector and a second active material.

The first electrode plate 111 may be formed by coating a first active material made of, for example, a metal oxide, a metal sulfide, or a specific polymer, on the first current collector.

The first current collector may include, for example, aluminum, titanium, or an alloy thereof. The first current collector may be in the form of, for example, a thin film, a lath, a punched metal, or a net. In order to provide a thin film type secondary battery, a thickness of the first current collector may be smaller than, for example, 20 µm.

In addition, a first tab 111a may be formed in the first current collector to be connected to a first lead 111b, and the first lead 111b extends to the outside of the outer case 120. The first tab 111a and the first lead 111b may include, for example, aluminum, titanium, or an alloy thereof. A partial region of the periphery of the first tab 111a may be covered by a first insulation film 111c so as to not be shorted by the metal layer of the outer case 120.

The first active material used may vary depending on the type of secondary battery manufactured but is not particularly limited. For example, in a case of manufacturing a lithium battery or a lithium ion battery, any suitable material that is capable of intercalating and deintercalating lithium ions may be used as the first active material. For example, the first active material may include a metal sulfide or oxide not containing lithium, such as TiS₂, MoS₂, NbSe₂, or V₂O₅, or a lithium composite oxide represented by a general formula LiₓMO₂, where M is one or more transition metals, and generally 0.05≦x≦1.10 according to the charged or discharged state of battery. In one embodiment, the transition metal M may be Co, Ni, or Mn. Specific examples of the lithium composite oxide may include LiCO₂, LiNiO₂, LiN_{y}CO_{1-y}O₂ (o<y<1), or LiMn₂O₄. The lithium composite oxide may generate a high voltage and may have a superior energy density.

In particular, lithium cobalt oxide or lithium nickel oxide may be used as the first active material to attain a high voltage, a high volume density, and good cycle life characteristics. The lithium composite oxide may be prepared by pulverizing and mixing a carbonate, acetate, oxide, or hydride of lithium, and a carbonate, acetate, oxide, or hydride of cobalt, manganese, or nickel according to a desired composition ratio and sintering the mixture at a temperature in a range of 600 to 1,000° C. in an oxygen atmosphere. In addition, when an electrode is formed using one of the aforementioned first active materials, a suitable conductive agent or a binder may be further added.

The second electrode plate 112 may be formed by coating a second active material onto the second current collector.

The second current collector may include, for example, copper, nickel, or an alloy thereof. The second current collector may be in the form of, for example, a thin film, a lath, a punched metal, or a net. In order to provide a thin film type secondary battery, a thickness of the second current collector may be smaller than, for example, 20 µm.

In addition, a second tab 112a may be formed in the second current collector to be connected to a second lead 112b, and the second lead 112b extends to the outside of the outer case 120. The second tab 112a and the second lead 112b may include, for example, copper, nickel, or an alloy thereof. A partial region of the periphery of the second tab 112a may be covered by a second insulation film 112c so as to not be shorted by the metal layer of the outer case 120.

The second active material used may vary depending on the type of battery manufactured but are not be particularly limited. For example, in a case of manufacturing a lithium secondary battery, any suitable material that is capable of doping and undoping lithium ions, such as a minimally graphitizable carbon-based material or a graphite-like carbon material, can be used as the second active material. For example, the second active material may be a carbonaceous material, such as an organic polymer compound sintered product, carbon fiber, or activated carbon, prepared by sintering pyrolyzed carbon, cokes such as pitch cokes, needle cokes or petroleum cokes, graphite, glass-like carbon, phenol resin, furan resin, etc. at an appropriate temperature, and carbonizing the same. Examples of the material capable of doping and undoping lithium ions may also include a polymer such as polyacetylene or polypyrrole, or an oxide such as SnO₂. When an electrode is formed using one of the aforementioned second active materials, a conductive agent or a binder that is widely used in the art may be further added.

The separator 113, in non-limiting examples, a porous polyolefin based separator or a ceramic separator. The polyolefin based separator may have a three-layered cylindrical pore structure of polypropylene (PP)/polyethylene (PE)/PP, or a single-layered net pore structure of PP or PE. The ceramic separator may be obtained, for example, by coating a ceramic onto a surface of the polyolefin based separator or by coating ceramic onto a surface of a non-woven fabric. The ceramic may be typically alumina.

In addition, a polymer electrolyte layer may be used as the separator 113. In this case, the polymer electrolyte layer may completely surround only the second electrode plate (negative electrode plate) 112. The polymer electrolyte layer may include, for example, a polymer solid electrolyte having a film separating characteristic, or a gel electrolyte having a plasticizer added thereto.

In addition, although not shown, if the separator does not include a polymer electrolyte layer, a separate electrolyte may be used. The electrolyte may include a lithium salt dissolved in an aprotonic solvent, or a mixed solvent having two or more kinds of these solvents. Examples of the aprotonic solvent may include propylene carbonate, ethylene carbonate, butylenes carbonate, benzonitrile, acetonitrile, tetrahydrofuran, 2-methyl tetrahydrofuran, y-butyrolactone, dioxolane, 4-methyl dioxolane, N,N-dimethyl formamide, dimethyl acetamide, dimethyl sulfoxide, dioxane, 1,2-dimethoxy ethane, sulfolane, dichloroethane, chlorobenzene, nitrobenzene, dimethyl carbonate, methylethyl carbonate, diethyl carbonate, methylpropyl carbonate, methylisopropyl carbonate, ethylbutyl carbonate, dipropyl carbonate, diisopropyl carbonate, dibutyl carbonate, diethylene glycol, dimethyl ether, or a mixture thereof. Examples of the lithium salt may include, but not limited to, LiPF₆, LiBF₄, LiSbF₆, LiAsF₆, LiClO₄, LiCF₃SO₃, Li(CF₃SO₂)₂N, LiC₄F₉SO₃, LiSbF₆, LiAlO₄, LiAlCl₄, LiN(CxF₂x+1SO₂)(CyF₂y+1SO₂) (where x and y are natural numbers), LiCl, Lil, or mixtures thereof.

In one embodiment, in order to increase flexibility of the electrode assembly 110, the first current collector and/or the second current collector may be a mesh type. In other implementations, the first current collector and/or the second current collector may be a foam type. For example, the first current collector may be made of foamed aluminum, and the second current collector may be made of foamed copper and/or foamed nickel. The second current collector (negative electrode plate) may be made of a carbon fiber. In this case, the second current collector itself may be capable of doping and undoping lithium ions, which may be advantageous in view of battery capacity.

The outer case 120 may surround the electrode assembly 110 so as to protect the electrode assembly 110 from the external environment. In other words, the outer case 120 may be in the form of a pouch or an envelope. In addition, the outer case 120 may include a first outer case 121 surrounding the first region 110a (e.g., approximately a top portion) of the electrode assembly 110 and a second outer case 122 surrounding the second region 110b (e.g., approximately a bottom portion) of the electrode assembly 110. The outer case 120 may further include a fused region 123 formed at an outer portion of the electrode assembly 110. While FIG. 1A illustrates a receiving area of the electrode assembly 110 as being formed in both the first outer case 121 and the second outer case 122 and the fused region 123 as being formed at roughly a central portion of the outer case 120, in other implementations, the receiving area of the electrode assembly 110 may be formed only in the second outer case 122 and the fused region 123 may be formed at approximately a bottom portion of the outer case 120.

Further, the first outer case 121 and the second outer case 122 may be directly connected to each other at a region corresponding to the folding part 118 of the electrode assembly 110. Therefore, a region at which the first outer case 121 and the second outer case 122 are folded may be defined as a folding part 128. In one embodiment, the first outer case 121 and the second outer case 122 may be integrally formed and may be folded at a region corresponding to the folding part 118 of the electrode assembly 110 to then be fused at the fused region 123. In addition, a region of the first outer case 121, corresponding to the end (right-angle surface) 114 of the electrode assembly 110, may be defined as a right-angle surface 124 and a region of the second outer case 122, corresponding to the end (right-angle surface) 115 of the electrode assembly 110, may be defined as another right-angle surface 125.

In other words, a surface of the first region 110a of the electrode assembly 110 and the end 114 of the electrode assembly 110 are perpendicular to each other, and a surface of the second region 110b of the electrode assembly 110 and the end 115 of the electrode assembly 110 are perpendicular to each other. Similarly, a surface of the first outer case 121 and the end 124 of the first outer case 121 are perpendicular to each other, and a surface of the second outer case 122 and the end 125 of the first outer case 121 are perpendicular to each other.

The outer case 120 may include a metal layer 121a having a first surface and a second surface in a form of a thin film, a first insulating layer 121b formed on the first surface of the metal layer 121a, and a second insulating layer 121c formed on a second surface of the metal layer 121a. In one embodiment, the metal layer 121a may be made of one selected from the group consisting of aluminum, copper, nickel and stainless steel. In addition, the first insulating layer 121b may be made, for example, of polyethylene terephthalate (PET) or nylon. The second insulating layer 121c may be a thermally adhesive layer, and may be made, for example, of a denatured polyolefin resin such as casted polypropylene (CPP) or a tercopolymer of propylene, butylene and ethylene.

The fused region 123 may be formed on the outer portion of the assembly 110 in such a manner that the second insulating layer 121c of the first outer case 121 and a second insulation layer of the second outer case 122 are thermally adhered to each other.

In such a manner, a highly productive secondary battery may be provided by attaining an electrode assembly having a thickness or capacity of approximately two times by folding a roughly central portion approximately one time, instead of reducing the number of electrode plates stacked to approximately half. In other words, for a given stack size, the thickness of the battery can be doubled by the folding.

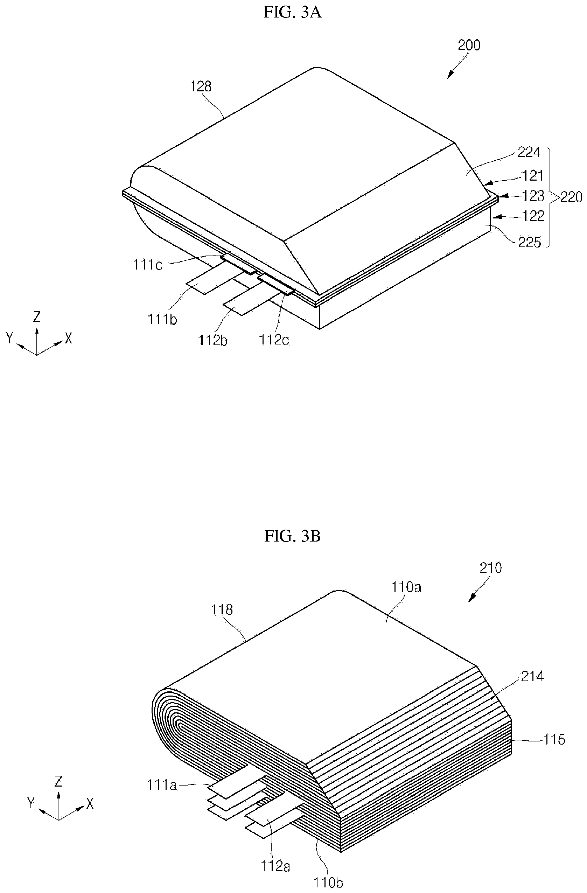

Referring to FIGS. 3A and 3B, perspective views of a secondary battery (200) and an electrode assembly (210) according to another embodiment of the present invention are illustrated.

As illustrated in FIGS. 3A and 3B, the secondary battery 200 according to another embodiment of the present invention includes an inclined surface 224 formed at an upper portion of one side of the secondary battery 200. In other words, the inclined surface 224 may be formed in a first outer case 121 of the outer case 220.

In more detail, the electrode assembly 210 may be defined by first and second regions 110a and 110b about a folding part 118. An inclined surface 214 is formed at an end of the first region 110a, positioned at an upper portion of the electrode assembly 210 and opposite to the folding part 118, and a right-angle surface 115 is formed at an end of the second region 110b, positioned at a lower portion of the electrode assembly 210 and opposite to the folding part 118.

In other words, the electrode assembly 210 is defined by the first and second regions 110a and 110b about the folding part 118 and the first and second regions 110a and 110b are asymmetrically formed in this embodiment. In other words, the electrode assembly 210, which is defined by the first and second regions 110a and 110b about the folding part 118, and areas and/or volumes of the first and second regions 110a and 110b are different from each other. In an exemplary implementation, the area and/or the volume of the upper, first region 110a may be smaller than the area and/or the volume of the lower, second region 110b.

Therefore, the inclined surface 224 is naturally formed in the outer case 220 surrounding the electrode assembly 210. In one embodiment, the inclined surface 224 is formed to range from the fused region 123 to a top surface of the first outer case 121. The right-angle surface 225 is formed to range from the fused region 123 to a bottom surface of the second outer case 122.

In such a manner, the present invention provides the secondary battery 200 including the electrode assembly 210 and the outer case 220 having a top portion and a bottom portion, which are substantially asymmetrical with respect to each other, using shapes of electrode plates folded. Therefore, the secondary battery 200 can be easily received in various forms of receiving spaces of external sets.

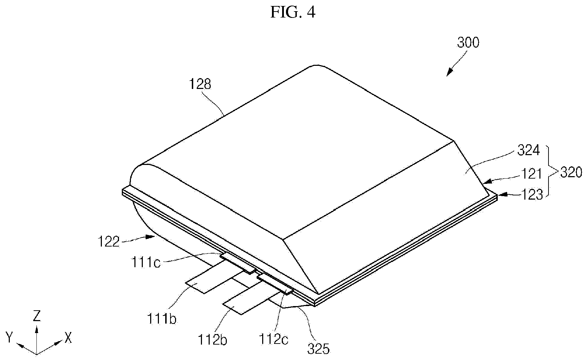

Referring to FIG. 4, a perspective view of a secondary battery (300) according to still another embodiment of the present invention is illustrated.

As illustrated in FIG. 4, the secondary battery 300 according to still another embodiment of the present invention includes inclined surfaces 324 and 325 formed at upper and lower portions of its one side. In other words, the inclined surfaces 324 and 325 may be formed in the first outer case 121 and the second outer case 122 of the outer case 120.

Similarly, an electrode assembly is defined by first and second regions about a folding part, and inclined surfaces are formed at ends of a first region and a second region, respectively positioned at upper and lower portions of the electrode assembly and opposite to the folding part.

Therefore, the inclined surfaces 324 and 325 are naturally formed at the upper and lower portions of the outer case 320 surrounding the electrode assembly. In one embodiment, the inclined surface 324 is formed to range from the fused region 123 to the top surface of the first outer case 121 and the inclined surface 325 is formed to range from the fused region 123 to the bottom surface of the second outer case 122.

In such a manner, the present invention provides the secondary battery 300 including the electrode assembly and the outer case 320 having a top portion and a bottom portion, which are substantially asymmetrical with respect to each other, using shapes of electrode plates folded. Therefore, the secondary battery 300 can be easily received in various forms of receiving spaces of external sets.

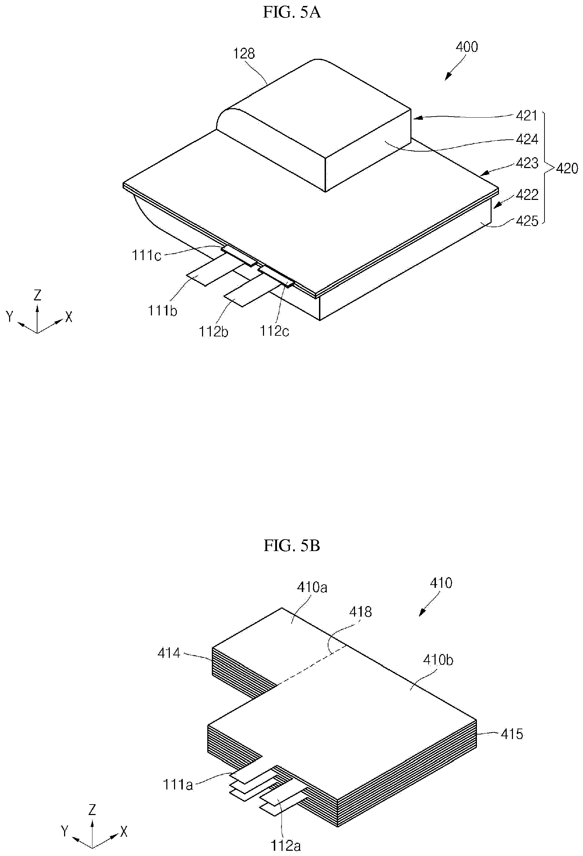

Referring to FIGS. 5A and 5B, a perspective view of a secondary battery (400) according to still another embodiment of the present invention and a perspective view illustrating an unfolded electrode assembly (410) are illustrated.

As illustrated in FIGS. FIG. 5A and 5B, the secondary battery 400 according to still another embodiment of the present invention has top and bottom regions substantially asymmetrically formed. In other words, a first outer case 421 and a second outer case 422, respectively positioned at upper and lower portions of the secondary battery 400, are asymmetrically formed about a folding part 128.

In more detail, the electrode assembly 410 is defined by first and second regions 410a and 410b about a folding part 418 and an area or a volume of the first region 410a, positioned at an upper portion of the electrode assembly 410, is smaller than an area or a volume of the second region 410b, positioned at a lower portion of the electrode assembly 410.

Therefore, in the outer case 420 surrounding the electrode assembly 410, the upper, first outer case 421 and the lower, second outer case 422 may have different areas and/or volumes. In other words, an area or a volume of the upper, first outer case 421, is smaller than an area or a volume of the lower, second outer case 422.

In one embodiment, a region of the first outer case 421, corresponding to the end (right-angle surface) 414 of the electrode assembly 410, may be defined as a right-angle surface 424 and a region of the second outer case 422, corresponding to the end (right-angle surface) 415 of the electrode assembly 410, may be defined as another right-angle surface 425.

In such a manner, the embodiment provides the secondary battery 400 including the electrode assembly 410 and the outer case 420 having a top portion and a bottom portion, which are substantially asymmetrical with respect to each other, using shapes of electrode plates folded. Therefore, the secondary battery 400 can be easily received in various forms of receiving spaces of external sets.

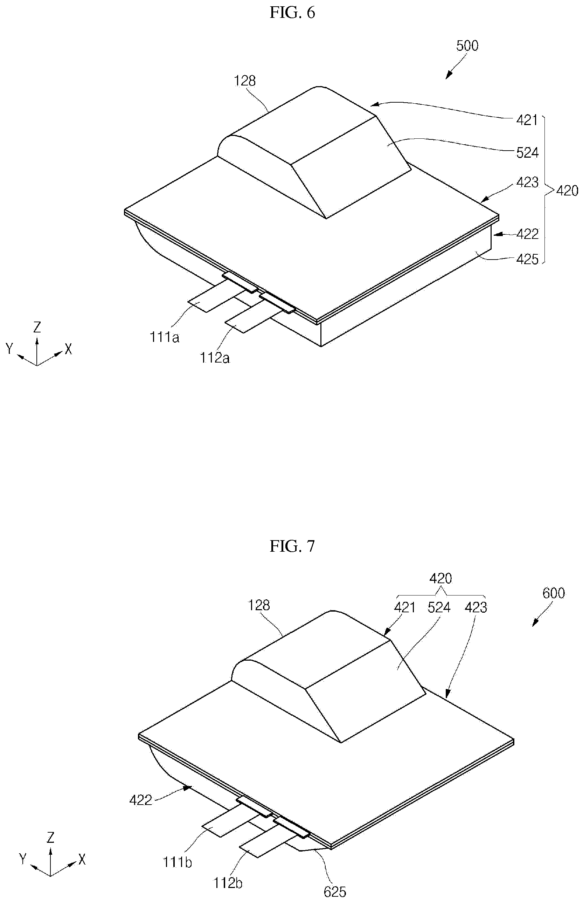

Referring to FIG. 6 is a perspective view of a secondary battery (500) according to still another embodiment of the present invention is illustrated. Referring to FIG. 7, a perspective view of a secondary battery (600) according to still another embodiment of the present invention is illustrated.

As illustrated in FIG. 6, the secondary battery 500 according to still another embodiment of the present invention includes an inclined surface 524 formed at an end of a first region of an upper, first outer case 421 of an outer case 420 and/or an electrode assembly. As illustrated in FIG. 7, the secondary battery 600 according to still another embodiment of the present invention includes an inclined surface 625 formed at an end of an upper, first outer case 421 of an outer case 420 or/and a first region of an electrode assembly, and an inclined surface 625 formed at an end of a lower, second outer case 422 of the outer case 420 or/and a second region of the electrode assembly.

In such a manner, the present invention provides the secondary battery 500, 600 including the electrode assembly and the outer case 420 having a top portion and a bottom portion, which are substantially asymmetrical with respect to each other, using shapes of electrode plates folded. Therefore, the secondary batteries 500 and 600 can be easily received in various forms of receiving spaces of external sets.

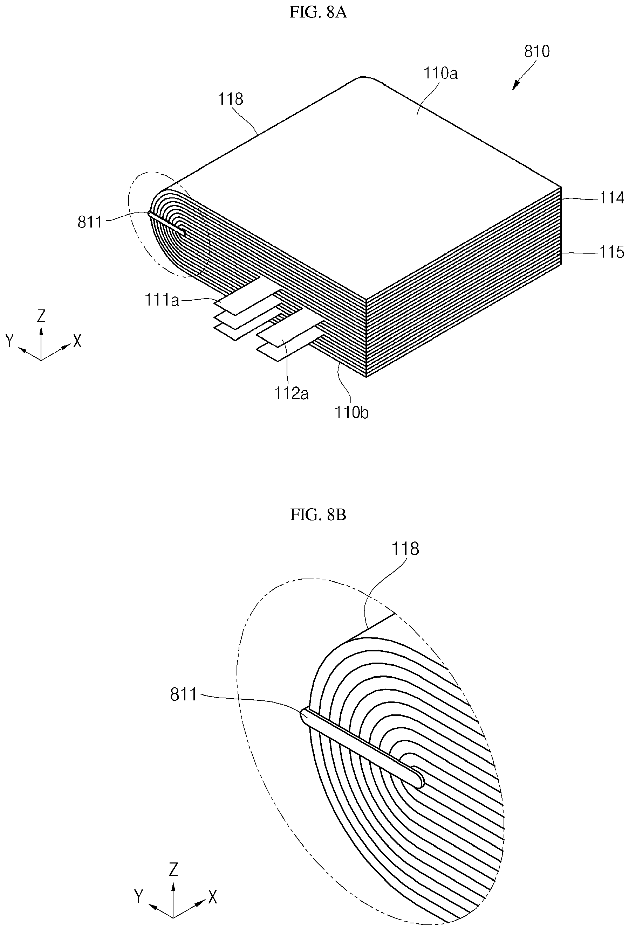

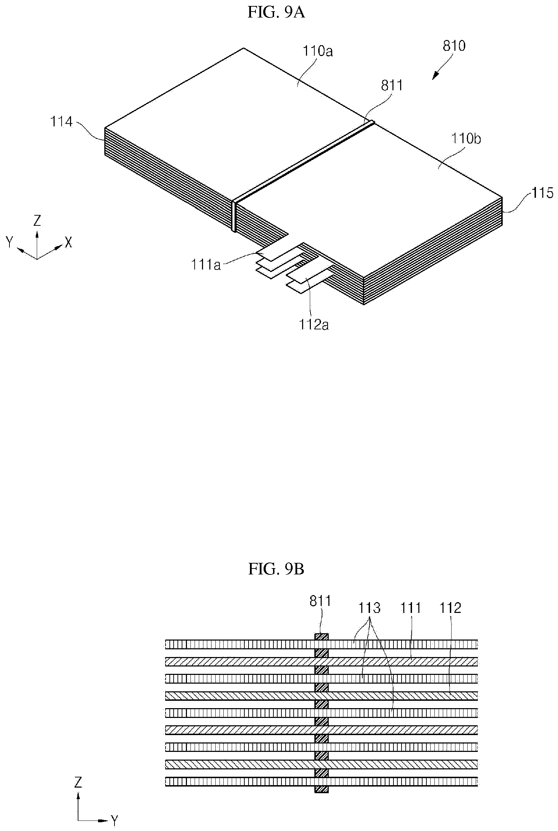

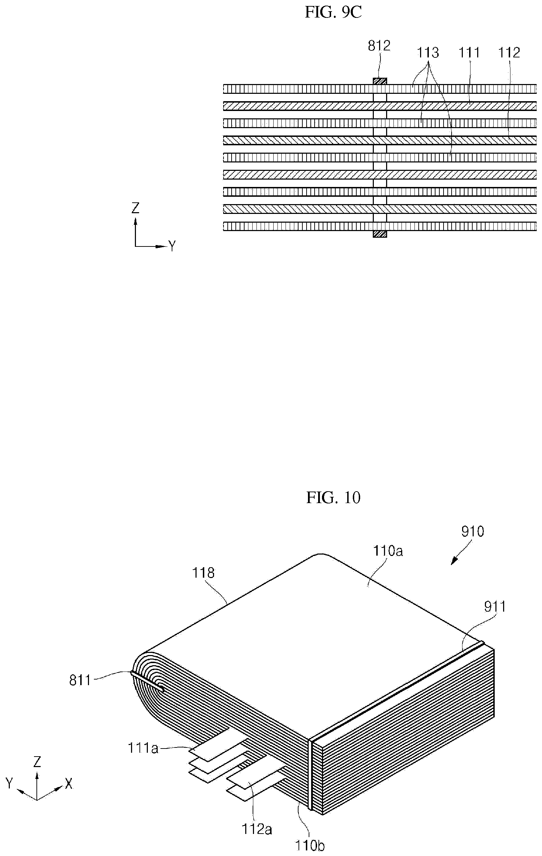

Referring to FIGS. 8A and 8B, a perspective view and a partly enlarged perspective view of an electrode assembly (810) according to still another embodiment of the present invention are illustrated. In addition, referring to FIGS. 9A, 9B and 9C, perspective views and a cross-sectional view illustrating a state in which the electrode assembly (810) according to the present invention is yet to be folded are illustrated.

As illustrated in FIGS. 8A and 8B, the secondary battery according to the present invention may further include a coupling part 811 formed along a folding part 118 of an electrode assembly 810. In other words, the electrode assembly 810 may be defined by a first region 110a and a second region 110b about the folding part 118, and the coupling part 811, similar to a bookbinding line, is further formed along the folding part 118. The coupling part 811 fixes beforehand central regions of a first electrode plate 111, a separator 113 and a second electrode plate 112 constituting the electrode assembly 810, thereby facilitating folding of the electrode assembly 810 about the coupling part 811, that is, the folding part 118. In other words, when the first region 110a and the second region 110b of the electrode assembly 810 are folded, the coupling part 811 fixes a central region of the electrode assembly 810 beforehand, thereby easily folding the first region 810a of the electrode assembly 810 from the second region 810b or easily folding the second region 810b of the electrode assembly 810 from the first region 810a.

As illustrated in FIG. 9B, the coupling part 811 may be formed on an inner surface of the electrode assembly 810. In other words, the coupling part 811 is formed between each of the first electrode plate 111, the separator 113 and the second electrode plate 112, and may coupling to each other.

In addition, as illustrated in FIG. 9C, the coupling part 812 may be formed on an outer surface of the electrode assembly 810. In other words, the coupling part 812 binds the surface of the electrode assembly 810, as a rubber band does.

The coupling parts 811 and 812 may be made of polypropylene (PP), polyethylene (PE) or ethylene propylene diene M-class (EPDM) rubber, but embodiments of the invention are not limited thereto. Additionally, various materials that do not react with an electrolyte may be used as the coupling parts 811 and 812.

As described above, since the coupling parts 811 and 812 are formed at roughly at a central region of the electrode assembly 810, folding of the electrode assembly 810 can be easily performed.

Referring to FIG. 10, a perspective view of an electrode assembly (910) of a secondary battery according to still another embodiment of the present invention is illustrated.

As illustrated in FIG. 10, the secondary battery according to still another embodiment of the present invention may further include a second coupling part 911 formed at a position spaced from a folding part 118 to surround the electrode assembly 910. The second coupling part 911 is substantially the same as the coupling parts 811 and 812 in view of materials and/or configurations, except for the position of the coupling part formed.

The second coupling part 911 may prevent the electrode assembly 910 folded about the coupling parts 811 and 812 or the folding part 118 from restoring to its original position. Therefore, after the coupling parts 811 and 812 are formed roughly at the central region of the electrode assembly 910 and are then folded about the coupling parts 811 and 812 or the folding part 118, the second coupling part 911 is formed in the electrode assembly 910 opposed to the coupling parts 811 and 812 or the folding part 118, thereby maintaining the shape of the electrode assembly 910 without deformation during a fabrication process of the secondary battery. Therefore, processes of connecting an electrode lead to the electrode assembly 910 and encasing the electrode assembly 910 can be easily performed.

A discussed, embodiments of the invention can provide a secondary battery comprising: an electrode assembly comprising a first electrode plate, a separator, and a second electrode plate stacked together and folded about a folding part; an outer case surrounding the electrode assembly; and an electrode lead electrically connected to the electrode assembly and extending to the outside of the outer case.

The electrode assembly may be defined by first and second regions about the folding part and the first and second regions may be symmetrically or asymmetrically formed. The folding part may comprise a central region of the electrode assembly when in the unfolded state.

The outer case may be shaped to fit the shape of the electrode assembly.

In some embodiments, the electrode assembly may be shaped to fit in a receiving space of an electrical device. For example, the receiving space may be asymmetrical and the first and second regions may be asymmetrically formed to fit in the receiving space.

Embodiments of the invention can also provide an electrical device comprising a receiving space for a secondary battery, and a secondary battery of any of the discussed embodiments.

While the secondary battery of the present invention has been particularly shown and described with reference to exemplary embodiments thereof, it will be understood by those of ordinary skill in the art that various changes in form and details may be made therein without departing from the scope of the present invention as defined by the following claims. It is therefore desired that the present embodiments be considered in all respects as illustrative and not restrictive, reference being made to the appended claims rather than the foregoing description to indicate the scope of the invention.

## Claims

1. A secondary battery (100) comprising:
an electrode assembly (110) comprising a first electrode plate (111), a separator (113), and a second electrode plate (112) stacked together and folded about a folding part (118);
an outer case (120) surrounding the electrode assembly; and
an electrode lead (111a, 112a) electrically connected to the electrode assembly and extending to the outside of the outer case, **characterised in that** the electrode assembly further includes a coupling part (811, 812) formed along the folding part and arranged to fix a central region of the electrode assembly.

2. The secondary battery (100) of claim 1, wherein the electrode assembly (110) is defined by first and second regions (110a, 110b) about the folding part (118) and wherein the first and second regions are symmetrically formed.

3. The secondary battery (100) of claim 1, wherein the electrode assembly (110) is defined by first and second regions (110a, 110b) about the folding part (118) and wherein the first and second regions are asymmetrically formed.

4. The secondary battery (100) of claim 1 or 3, wherein the electrode assembly (110) is defined by first and second regions (110a, 110b) about the folding part (118) and wherein the first region or the second region has an inclined surface (214) formed at its end.

5. The secondary battery (100) of claim 1 or 2, wherein the electrode assembly (110) is defined by first and second regions (110a, 110b) about the folding part (118) and wherein areas of the first and second regions are substantially equal to each other.

6. The secondary battery (100) of claim 1, 3 or 4, wherein the electrode assembly (110) is defined by first and second regions (110a, 110b) about the folding part (118) and wherein areas of the first and second regions are different from each other.

7. The secondary battery (100) of any one of the preceding claims, wherein the coupling part (811) is formed on an inner surface of the electrode assembly (110).

8. The secondary battery (100) of any one of the preceding claims, wherein the coupling part (811) is formed between each of the first electrode plate (111), the separator (113), and the second electrode plate (112).

9. The secondary battery (100) of any one of the preceding claims, wherein the coupling part (812) is formed on an outer surface of the electrode assembly (110).

10. The secondary battery (100) of any one of the preceding claims, wherein the coupling part (811, 812) comprises polypropylene (PP), polyethylene (PE) or ethylene propylene diene M-class (EPDM) rubber.

11. The secondary battery (100) of any one of claims 1 to 10, wherein the electrode assembly (110) further includes a coupling part (911) formed at a position spaced from the folding part (118) to surround the electrode assembly, wherein the coupling part is arranged to maintain the shape of the electrode assembly.

12. The secondary battery (100) of any one of claims 1 to 11, wherein the electrode assembly (110) is shaped to fit in a receiving space of an electrical device.

13. An electrical device comprising:
a receiving space for a secondary battery; and
a secondary battery (100) of any one of claims 1 to 12.

14. An electrical device according to claim 13, wherein the secondary battery (100) is according to claim 3 or any claim when dependent on claim 3;
wherein the receiving space is asymmetrical and the first and second regions (110a, 110b) are asymmetrically formed to fit in the receiving space.

## Patentansprüche

1. Sekundärbatterie (100), umfassend:
eine Elektrodenanordnung (110), die eine erste Elektrodenplatte (111), einen Separator (113) und eine zweite Elektrodenplatte (112) umfasst, die übereinander gestapelt und um ein Faltteil (118) gefaltet sind;
ein Außengehäuse (120), das die Elektrodenanordnung umgibt; und
eine Elektrodenleitung (111a, 112a), die elektrisch mit der Elektrodenanordnung verbunden ist und zur Außenseite des Außengehäuses verläuft,
**dadurch gekennzeichnet, dass**
die Elektrodenanordnung ferner ein Verbindungsteil (811, 812) aufweist, das entlang dem Faltteil ausgebildet und so angeordnet ist, dass es einen mittigen Bereich der Elektrodenanordnung fixiert.

2. Sekundärbatterie (100) nach Anspruch 1, wobei die Elektrodenanordnung (110) durch einen ersten und zweiten Bereich (110a, 110b) um das Faltteil (118) herum definiert ist und wobei der erste und zweite Bereich symmetrisch geformt sind.

3. Sekundärbatterie (100) nach Anspruch 1, wobei die Elektrodenanordnung (110) durch einen ersten und zweiten Bereich (110a, 110b) um das Faltteil (118) herum definiert ist und wobei der erste und zweite Bereich asymmetrisch geformt sind.

4. Sekundärbatterie (100) nach Anspruch 1 oder 3, wobei die Elektrodenanordnung (110) durch einen ersten und zweiten Bereich (110a, 110b) um das Faltteil (118) herum definiert ist und wobei der erste Bereich oder der zweite Bereich eine geneigte Fläche (214) aufweist, die an seinem Ende ausgebildet ist.

5. Sekundärbatterie (100) nach Anspruch 1 oder 2, wobei die Elektrodenanordnung (110) durch einen ersten und zweiten Bereich (110a, 110b) um das Faltteil (118) herum definiert ist und wobei Flächen des ersten und zweiten Bereichs im Wesentlichen einander entsprechen.

6. Sekundärbatterie (100) nach Anspruch 1, 3 oder 4, wobei die Elektrodenanordnung (110) durch einen ersten und zweiten Bereich (110a, 110b) um das Faltteil (118) herum definiert ist und wobei sich Flächen des ersten und zweiten Bereichs voneinander unterscheiden.

7. Sekundärbatterie (100) nach einem der vorhergehenden Ansprüche, wobei das Verbindungsteil (811) an einer Innenfläche der Elektrodenanordnung (110) ausgebildet ist.

8. Sekundärbatterie (100) nach einem der vorhergehenden Ansprüche, wobei das Verbindungsteil (811) zwischen jeweils der ersten Elektrodenplatte (111), dem Separator (113) und der zweiten Elektrodenplatte (112) ausgebildet ist.

9. Sekundärbatterie (100) nach einem der vorhergehenden Ansprüche, wobei das Verbindungsteil (812) an einer Außenfläche der Elektrodenanordnung (110) ausgebildet ist.

10. Sekundärbatterie (100) nach einem der vorhergehenden Ansprüche, wobei das Verbindungsteil (811, 812) Polypropylen (PP), Polyethylen (PE) oder Ethylen-Propylen-DienKautschuk der M-Gruppe (EPDM) umfasst.

11. Sekundärbatterie (100) nach einem der Ansprüche 1 bis 10, wobei die Elektrodenanordnung (110) ferner ein Verbindungsteil (911) aufweist, das an einer Stelle in einem Abstand zum Faltteil (118) ausgebildet ist und so die Elektrodenanordnung umgibt, wobei das Verbindungsteil so angeordnet ist, dass es die Form der Elektrodenanordnung aufrechterhält.

12. Sekundärbatterie (100) nach einem der Ansprüche 1 bis 11, wobei die Elektrodenanordnung (110) so geformt ist, dass sie in einen Aufnahmeraum eines elektrischen Geräts passt.

13. Elektrisches Gerät, umfassend:
einen Aufnahmeraum für eine Sekundärbatterie; und
eine Sekundärbatterie (100) nach einem der Ansprüche 1 bis 12.

14. Elektrisches Gerät nach Anspruch 13, wobei die Sekundärbatterie (100) Anspruch 3 oder einem beliebigen Anspruch entspricht, wenn er von Anspruch 3 abhängt;
wobei der Aufnahmeraum asymmetrisch ist und der erste und zweite Bereich (110a, 110b) asymmetrisch ausgebildet sind, damit sie in den Aufnahmeraum passen.

## Revendications

1. Batterie secondaire (100) comprenant :
un ensemble d'électrodes (110) comprenant une première plaque d'électrode (111), un séparateur (113), et une deuxième plaque d'électrode (112) empilés ensemble et pliés autour d'une partie de pliage (118) ;
un boîtier externe (120) entourant l'ensemble d'électrodes ; et
un conducteur d'électrodes (111a, 112a) relié électriquement à l'ensemble d'électrodes et s'étendant vers l'extérieur du boîtier externe,
**caractérisée en ce que** l'ensemble d'électrodes comporte en outre une partie de couplage (811, 812) formée le long de la partie de pliage et agencée pour fixer une région centrale de l'ensemble d'électrodes.

2. Batterie secondaire (100) de la revendication 1, dans laquelle l'ensemble d'électrodes (110) est défini par des première et deuxième régions (110a, 110b) autour de la partie de pliage (118) et dans laquelle les première et deuxième régions sont formées de manière symétrique.

3. Batterie secondaire (100) de la revendication 1, dans laquelle l'ensemble d'électrodes (110) est défini par des première et deuxième régions (110a, 110b) autour de la partie de pliage (118) et dans laquelle les première et deuxième régions sont formées de manière asymétrique.

4. Batterie secondaire (100) de la revendication 1 ou 3, dans laquelle l'ensemble d'électrodes (110) est défini par des première et deuxième régions (110a, 110b) autour de la partie de pliage (118) et dans laquelle la première région ou la deuxième région a une surface inclinée (214) formée au niveau de son extrémité.

5. Batterie secondaire (100) de la revendication 1 ou 2, dans laquelle l'ensemble d'électrodes (110) est défini par des première et deuxième régions (110a, 110b) autour de la partie de pliage (118) et dans laquelle les superficies des première et deuxième régions sont essentiellement égales l'une à l'autre.

6. Batterie secondaire (100) de la revendication 1, 3 ou 4, dans laquelle l'ensemble d'électrodes (110) est défini par des première et deuxième régions (110a, 110b) autour de la partie de pliage (118) et dans laquelle les superficies des première et deuxième régions sont différentes l'une de l'autre.

7. Batterie secondaire (100) de l'une quelconque des revendications précédentes, dans laquelle la partie de couplage (811) est formée sur une surface interne de l'ensemble d'électrodes (110).

8. Batterie secondaire (100) de l'une quelconque des revendications précédentes, dans laquelle la partie de couplage (811) est formée entre chacun de la première plaque d'électrode (111), du séparateur (113) et de la deuxième plaque d'électrode (112).

9. Batterie secondaire (100) de l'une quelconque des revendications précédentes, dans laquelle la partie de couplage (812) est formée sur une surface externe de l'ensemble d'électrodes (110).

10. Batterie secondaire (100) de l'une quelconque des revendications précédentes, dans laquelle la partie de couplage (811, 812) comprend du caoutchouc éthylène-propylène-diène de classe M (EPDM), du polypropylène (PP) ou du polyéthylène (PE).

11. Batterie secondaire (100) de l'une quelconque des revendications 1 à 10, dans laquelle l'ensemble d'électrodes (110) comporte en outre une partie de couplage (911) formée au niveau d'une position espacée de la partie de pliage (118) pour entourer l'ensemble d'électrodes, dans laquelle la partie de couplage est agencée pour conserver la forme de l'ensemble d'électrodes.

12. Batterie secondaire (100) de l'une quelconque des revendications 1 à 11, dans laquelle l'ensemble d'électrodes (110) est façonné pour s'ajuster dans un espace de réception d'un dispositif électrique.

13. Dispositif électrique comprenant :
un espace de réception pour une batterie secondaire ; et
une batterie secondaire (100) de l'une quelconque des revendications 1 à 12.

14. Dispositif électrique selon la revendication 13, dans lequel la batterie secondaire (100) est selon la revendication 3 ou toute revendication dépendant de la revendication 3 ;
dans lequel l'espace de réception est asymétrique et les première et deuxième régions (110a, 110b) sont formées de manière asymétrique pour s'ajuster dans l'espace de réception.
